(19) Europäisches Patentamt
European Patent Office
Office européen des brevets

(11) **EP 4 430 743 B1**

(12) **EUROPEAN PATENT SPECIFICATION**

(45) Date of publication and mention of the grant of the patent:
**14.01.2026 Bulletin 2026/03**

(21) Application number: **22806000.0**

(22) Date of filing: **10.11.2022**

(51) International Patent Classification (IPC):
***H02P 23/00*** *(2016.01)* ***H02P 29/66*** *(2016.01)*
***H02P 25/18*** *(2006.01)*

(52) Cooperative Patent Classification (CPC):
**H02P 29/662; H02P 23/0027;** H02P 25/18

(86) International application number:
**PCT/IB2022/060827**

(87) International publication number:
**WO 2023/084438 (19.05.2023 Gazette 2023/20)**

(54) **METHOD FOR RECONFIGURING AN ELECTRIC MACHINE**
VERFAHREN ZUR REKONFIGURATION EINER ELEKTRISCHEN MASCHINE
PROCÉDÉ DE RECONFIGURATION D'UNE MACHINE ÉLECTRIQUE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **12.11.2021 IT 202100028772**

(43) Date of publication of application:
**18.09.2024 Bulletin 2024/38**

(73) Proprietor: **Eldor Corporation S.p.A.**
**22030 Orsenigo (Como) (IT)**

(72) Inventors:
- **FORTE, Pasquale**
**22030 ORSENIGO (COMO) (IT)**
- **ZAI, Luca**
**22030 ORSENIGO (COMO) (IT)**
- **SECCIA, Ruggero**
**22030 ORSENIGO (COMO) (IT)**
- **PEREIRA RIVAS, Javier Eduardo**
**22030 ORSENIGO (COMO) (IT)**

(74) Representative: **Zermani Biondi Orsi, Umberto**
**Bugnion S.p.A.**
**Viale Lancetti, 17**
**20158 Milano (IT)**

(56) References cited:
**US-A1- 2015 303 860** **US-A1- 2021 237 603**
**US-A1- 2021 323 415**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 430 743 B1

## Description

The present invention relates to the control of electro-vehicles or hybrid electro-vehicles with an integrated reconfigurable system.

In particular, the present invention relates to a method for reconfiguring an electric machine, said electric machine being preferably hosted on an electric vehicle.

An electric machine is a machine that comprises a rotor whose rotation generates a back electromotive force (BEMF). An inverter usually feeds the electric machine. In regular electric machines the BEMF force has a value always below or at least equal to the one of the supply voltage of the electric machine, because the inverter is controlled to avoid the opposite situation.

In a zone where the e-machine would naturally generate a BEMF that exceeds the supply voltage, the inverter can never be switched off because otherwise dangerous side effects as here below detailed would arise.

The back electromotive force depends, among other features, on the angular speed $\omega$ of the rotor. For this reason, there exists a threshold value $\omega_{th}$ of such angular speed above which the back electromotive force exceeds the supply voltage. Such threshold value $\omega_{th}$ depends on the supply voltage, the current in the rotor, if present, and the temperature of the magnets constrained to the rotor.

Documents WO 2020/194230, WO 2021/099894 and WO 2021/079332 discloses recent electric machines, in particular three-phases electric machines, which are designed to adopt different electrical configurations based on different connections and/or topology of the three-phases, in order to achieve different performances according to different uses of the electric machine itself.

A process for reconfiguring (namely the switching between one configuration and another one) an electric machine, however, needs the inverter to be disconnected for a few moments, so rendering quite dangerous to perform the reconfiguration at speeds higher that the threshold value.

For this reason, the reconfiguration is usually done at predetermined and fixed values of the angular speed of the rotor of the electric machine, said fixed values being predetermined in advance and in a very precautionary way, namely by selecting values with the machine operating in the worst-case scenario. Usually, these fixed values are set during a design phase of the electric machine and they are further tuned during calibration testing of the electric machine.

A typical method for a state-of-the-art reconfiguring process is performed according to the steps shown in the block diagram of figure 1.

Documents JPH053694A, US2021/237603 or US2015/303860 disclose examples of such known method.

In a first step 10, the current configuration of the electric machine is determined. Then, at step 20 the angular speed $\omega$ of the rotor of the electric machine is acquired and compared with a fixed threshold $\omega_{fixed_th1}$ and finally, based on the result of such comparison, in a further step 40 a reconfiguration decision and reconfiguration operation is carried out. To be noted that the angular speed $\omega$ of the rotor of the electric machine can be compared with one or more fixed threshold values, as in step 30, and the reconfiguration logic performed at step 40 can be arbitrarily complex - using hysteresis, prediction or deterministic equations involving other parameters - but the speed thresholds in which relies on are always fixed and determined in advance.

This approach of setting the fixed thresholds in advance has been generally used in reconfigurable systems since their creation, and it has been especially applied to trains, turbines or drilling machines.

On the contrary, in electric or hybrid vehicles the limitations of this simplified approach can be evident in the following aspects.

In every system that involves an electric machine, power electronics and a voltage supply, there is a phenomenon known as UGO (Uncontrolled Generator Operation) that happens when the inverter that feeds the electric machine is erroneously switched off at values of the angular speed $\omega$ exceeding the threshold value $\omega_{th}$, so that the electric machine voltage generated by the rotation of the rotor (BEMF) exceeds the value of the supply voltage.

This is a negative situation that should always be avoided.

Figure 10 shows a graph wherein a first line 400 representing the voltage supply of an electric machine intersects a second line 402 representing the induced voltage produced by the electric machine, this intersection occurring at a certain speed $\omega$ of the rotor.

For example, in permanent magnet electric motors or wrapped rotors, the voltage induced by the presence of magnets or magnetizing current, which is proportional to the operational speed of the rotor, can exceed the voltage supply.

When the inverter is turned off and the voltage induced by the electric machine is higher than the supply voltage, a power flow from the wheels of the vehicle to the supply voltage is generated. This energy flow corresponds to an uncontrolled braking of the vehicle, which may be dangerous for the users inside the vehicle and people outside the vehicle.

The flow of power goes from the electric machine towards the voltage supply, and if this phenomenon is not properly handled, it can destroy the electric machine, the inverter or the battery.

Figure 2 shows a supply circuit 50 for an electric machine wherein an UGO phenomenon can happen. The circuit 50 includes a supply voltage generator 52, such a battery, and an electric machine such as a three-phases motor 54, connected with three phases *a, b* and *c* to the supply voltage generator 52 through an inverter, of which only the recirculation diodes 55 are shown, and a condenser 56 placed in parallel to the supply voltage generator 52.

The uncontrolled power flow that goes from the electric machine 54 towards the supply voltage generator 52 implies also a braking torque to the electric machine shaft, that grows rapidly depending on the rotor speed and the design characteristics of the electric machine. These effects are shown in the figures 3a-3c.

Figure 3a shows a graph of the rotor speed vs. the shaft torque; figure 3b shows a graph of the rotor speed vs. the power regenerated during the unwanted braking and figure 3c shows a graph of the rotor speed vs. the current flowing in the electric machine 54, in case of erroneous switching off of the inverter when the voltage induced by the electric machine is higher than the supply voltage. An area 60 indicates where the UGO phenomenon happens.

In the situation of switching off of the inverter, UGO and all the related consequences can arise because, as said, a reconfiguration process includes turning off the inverter.

It is therefore evident that a threshold on the rotor speed must be applied in order to avoid performing a reconfiguration in situations when an UGO phenomenon can arise. This threshold condition can be easily applied considering the following equation:

$$V_{supply} > K_v \omega$$

where $V_{supply}$ is the supply voltage, $K_v$ is a voltage constant which depends on electric machine parameters and $\omega$ is the speed of the rotor of the electric machine.

Usually, $K_v$ is determined in advance during a design and calibration phase of the electric machine, hence, the equation becomes:

$$\omega < V_{supply}/K_v$$

Therefore, the threshold becomes a fixed value:

$$\omega_{th} = V_{supply}/K_v$$

because $V_{supply}$ and $K_v$ are considered as two constant values.

The problem of this approach is that in reality both $V_{supply}$ and $K_v$ are two parameters which can vary during electric machine operation, therefore, applying a fixed threshold to the angular speed is not the more convenient choice, as disclosed here below.

For example, in the case of a permanent magnet electric machine, $K_v$ varies as a function of the magnet and windings temperature. In other cases, as a wounded rotor electric machine, $K_v$ varies also as a function of the current circulating through the rotor besides the already mentioned magnet and windings temperature.

Figure 4 shows a first graph of a fixed threshold $\omega_{fixed_th}$ applied to an electric machine that turns off the inverter to pass from a first configuration $config_1$ to a second configuration $config_2$. In an UGO area 62 a UGO phenomenon occurs, therefore, if the angular speed of the rotor is below the fixed threshold $\omega_{fixed_th}$ but still in the UGO area 62 (in particular, in a fault area 62a), the reconfiguration from the first configuration $config_1$ to the second configuration $config_2$ is performed, but a problem to the electric machine occurs. It is evident that this situation should not happen.

In fact, if the real threshold $w_{real_th}$ of the angular speed of the rotor that varies in real-time manner and which should not be exceeded to perform a safe reconfiguration from the first configuration $config_1$ to the second configuration $config_2$, is lower than the fixed threshold $\omega_{fixed_th}$, then the electric machine carries out the reconfiguration from the first configuration $config_1$ to the second configuration $config_2$ in the dangerous UGO area 62, thus generating all the above-mentioned effects.

In order to solve the above-mentioned problem, the worst possible operating condition should be considered, wherein the fixed threshold $\omega_{fixed_th}$ is put equal to the ratio between the supply voltage and the voltage constant taken in the worst possible condition.

Figure 5 shows a second graph of the fixed threshold $\omega_{fixed_th}$ applied to an electric machine that turns off the inverter to pass from a first configuration $config_1$ to a second configuration $config_2$. As already mentioned, the fixed threshold set as worst-case scenario generates a a low-performance area 64 in which a loss in performance and comfort occurs, due to an early reconfiguration.

A torque drop is evident when the reconfiguration occurs at a maximum torque request and before the $\omega_{fixed_th}$, thus producing a reduced performance for acceleration, an unpredictable performance for the driver when the electric machine is applied to a vehicle because the torque drop depends on the current state of the electric machine. Furthermore, comfort problems also occur, this being particularly important considering that current battery electric vehicles have no torque drop at all.

Figure 6 shows a third graph of a fixed threshold $\omega_{fixed_th}$ applied to an electric machine. As already mentioned, the fixed threshold set as worst-case scenario generates an early-reconfiguration area 66 in which a loss in system efficiency occurs, due to an early reconfiguration. In the early-reconfiguration area 66 the first configuration *config₁* is more efficient than the second configuration *config₂*, but due to the fixed threshold $\omega_{fixed_th}$, the electric machine is forced to changed.

All the above situations show that a dangerous or inefficient operation of the electric machine can happen with a fixed threshold on the angular speed of the rotor.

There is therefore the need to provide a method for reconfiguring an electrical machine which allow obtaining the necessary safety in a simple manner, without losing performance, comfort and efficiency.

These and other objects are fully achieved by virtue of a method for reconfiguring an electrical machine having the characteristics defined in independent claim 1.

Preferred embodiments of the invention are specified in the dependent claims, whose subject-matter is to be understood as forming integral or integrating part of the present description.

Further characteristic and advantages of the present invention will become apparent from the following description, provided merely by way of non-limiting example, with reference to the attached drawings, in which:

- Figure 1 is a block diagram of the step of a reconfiguration method of the prior art;
- Figure 2 shows a circuit of an electric axle wherein an UGO phenomenon can happen;
- Figure 3a shows a graph of the rotor speed vs. the shaft torque of an electric machine during UGO phenomenon;
- Figure 3b shows a graph of the rotor speed vs. the power regenerated to the power supply during UGO phenomenon;
- Figure 3c shows a graph of the rotor speed vs. the current flowing in the electric machine during UGO phenomenon;
- Figure 4 shows a first graph of a fixed threshold $\omega_{fixed_th}$ applied to an electric machine;
- Figure 5 shows a second graph of the fixed threshold $\omega_{fixed_th}$ applied to an electric machine;
- Figure 6 shows a third graph of a fixed threshold $\omega_{fixed_th}$ applied to an electric machine;
- Figure 7 is a block diagram of the steps of a reconfiguration method according to the present invention;
- Figure 8 shows a block diagram of the steps of the reconfiguration method executed in parallel,
- Figure 9 shows a graph of variable thresholds $\omega_{real_th}$ applied to an electric machine with three possible configurations;
- Figure 10 shows a graph with a first line representing the voltage supply of an electric machine intersecting a second line representing the induced voltage produced by the electric machine.

With reference to the drawings, figure 7 is a block diagram of the steps of a reconfiguring method according to the present invention.

The method according to the present invention is applied to an electric machine including a rotor, arranged to rotate at a certain angular speed $\omega$, said rotor including a magnet.

In a first step 100, the real speed threshold $\omega_{real_th}$ is evaluated (or determined) in real-time manner as detailed here below, then, in step 102, it is checked if a current angular speed $\omega$ is greater than the real speed threshold $\omega_{real_th}$.

In positive case, in step 104 there is no reconfiguration.

In negative case, in step 106, the current configuration of the electric machine is determined in a manner per sé known, then, in step 108, a reconfiguring decision method per sé known is selected. After that, in step 110, it is decided whether to reconfigure the electric machine or not (according to predetermined selection strategies based on a control logic of the electric machine) and, in positive case, in step 112, the reconfiguration of the electric machine is performed.

The determination in real-time manner of the real speed threshold $\omega_{real_th}$ of step 100 is done by performing a temperature estimation of the magnet of the rotor and then applying deterministic equations to such temperature estimation, by performing a predictive logic process or by applying an analytical model of the full electric machine, in manners per se known.

In particular, the real speed threshold $\omega_{real_th}$ is function not only of the temperature of the magnet but also of the supply voltage and, if present, of the current in the rotor. The supply voltage and the current in the rotor can be measured using respective sensors.

In a more specific way, the real speed threshold $\omega_{real_th}$ can be evaluated with the following relationship:

$$\left[[\lambda_{mo} + \alpha(T - T_0)] + N_{rot} N_{stat} I_{rot}\right] \omega_{real_{th}} = \frac{V_{dc}}{\sqrt{3}} + 2V_{diode} + \Delta V_{stat}$$

where:

- $\lambda_{mo}$ and $T_0$ are respectively a predetermined reference magnetic flux and a respective reference temperature, evaluated by test or simulation;
- $\alpha$ is the thermal coefficient of the permanent magnet material, and it is given by its producer through datasheet or evaluated with test;
- $T$ is the magnet temperature which varies during electric machine operation, and it is estimated or measured with sensors;
- $N_{rot}$ and $N_{stat}$ are respectively the number of turns of the windings on the rotor, if present, and the number of turns of the windings on the stator, predetermined during a design phase;
- $I_{rot}$ is the current flowing in the rotor windings, if present, measured with sensors;
- $V_{dc}$ is the voltage of the supply, which varies during electric machine operation and is measured with sensor;
- $V_{diode}$ is the voltage drop across a recirculation diode;
- $\Delta V_{stat}$ is the voltage drop across the stator windings of the electrical machine.

In order to take in consideration non-linearities caused by magnetic saturation, leakage fluxes and edge effects of temperature-magnetic flux relationship, moreover, to neglect the voltage drops across diodes and electrical machine windings, an interval for the real speed threshold $\omega_{realth}$ can be considered:

$$0.92\frac{V_{dc}}{\sqrt{3}\left[[\lambda_{mo}+\alpha(T-T_0)]+N_{rot}N_{stat}I_{rot}\right]} \leq \omega_{real_{th}} \leq 1.08\frac{V_{dc}}{\sqrt{3}\left[[\lambda_{mo}+\alpha(T-T_0)]+N_{rot}N_{stat}I_{rot}\right]}$$

The interval limits are obtained by considering the UGO effects shown in figures 3a-3c. As can be seen in those figures, if by any means the real speed threshold $\omega_{realth}$ computed is far distant from the real value the UGO effects increase rapidly with dangerous consequences. Therefore, in order to allow a margin of error in the real speed threshold $\omega_{realth}$ computation due to non-linearities but at the same time guarantee the system safety, a predetermined error, advantageously an 8% error, is accepted, as this tolerance allows the UGO effects to be less than 5% of the maximum one possible.

The steps of figure 7 can be repeated sequentially, when multiple reconfigurations of the electric machine are considered in series, or in parallel, when multiple reconfigurations of the electric machine are considered in parallel.

Figure 8 shows a block diagram of the steps of the reconfiguration method of the present invention when executed in parallel.

In a first step 200 a first, second, ..., $n^{th}$ real speed threshold $\omega_{real_th1}$, $\omega_{real_th2}$, ..., $\omega r_{eal_thn}$ are evaluated (or determined) in real-time manner as here above detailed, then, in step 202, it is checked if a current angular speed $\omega$ is greater than the real speed thresholds $\omega_{real_th1}$, $\omega_{real_th2}$, ... , $\omega_{real_thn}$, respectively.

In positive case, in step 204 no reconfiguration is performed, and the method can start again at step 200. In negative case, in step 206, the current configuration of the electric machine is determined in manner per sé known and finally, in step 208, a reconfiguration decision method per sé known is selected.

After that, in step 210, it is decided whether to reconfigure the electric machine or not and, in positive case, in step 212, the reconfiguring of the electric machine is performed.

The method can then be repeated in recursive manner.

Figure 9 shows a graph of two variable thresholds $\omega_{real_th1}$ and $\omega_{real_th2}$ applied to an electric machine to pass from a first configuration *config₁*, to a second configuration *config₂* and to a third configuration *config₃*. In a first alert area 300 there is no reconfiguration to or from the first configuration *config₁* and the second configuration *config₂*, while in a second alert area 302 there is no reconfiguration to or from the first configuration *config₁*.

Clearly, the principle of the invention remaining the same, the embodiments and the details of production can be varied considerably from what has been described and illustrated purely by way of non-limiting example, without departing from the scope of protection of the present as defined in the attached claims.

## Claims

1. Method for reconfiguring an electric machine including a rotor arranged to rotate with an angular speed ($\omega$), wherein the electrical machine is fed with an inverter and a reconfiguration process includes turning off the inverter, the electric machine being arranged to pass from a first configuration ($config_1$) to a second configuration ($config_2$), the method **characterized by** the steps of:

a) determining (100) in real-time a real speed threshold ($\omega_{real_th}$) depending on the current operating condition of the electric machine;
b) checking (102) if the angular speed ($\omega$) of the rotor is greater than said real speed threshold ($\omega_{real_th}$);
c) in positive case, no reconfiguration is performed (104) from the first configuration (*config*$_1$);
d) in negative case:

d.1) determining (106) the current configuration of the electric machine;
d.2) selecting (108) a reconfiguring decision method;
d.3) deciding (110) whether to reconfigure the electric machine or not and, in positive case, reconfiguring (112) the electric machine

wherein the value of the real speed threshold ($\omega_{real_th}$) is determined in the following interval:

$$0.92\frac{V_{dc}}{\sqrt{3}\left[[\lambda_{mo}+\alpha(T-T_0)]+N_{rot}N_{stat}I_{rot}\right]}\leq\omega_{real_{th}}\leq 1.08\frac{V_{dc}}{\sqrt{3}\left[[\lambda_{mo}+\alpha(T-T_0)]+N_{rot}N_{stat}I_{rot}\right]}$$

wherein:

- $\lambda_{mo}$ and $T_0$ are respectively a reference magnetic flux and a respective reference temperature of the electric machine;
- $\alpha$ is the thermal coefficient of a permanent magnet material of magnets of the rotor;
- $T$ is the magnet temperature;
- $N_{rot}$ and $N_{stat}$ are respectively the number of turns of windings on the rotor and the number of turns of windings on a stator of the electric machine;
- $I_{rot}$ is the current flowing in the rotor windings;
- $V_{dc}$ is a supply voltage of the electric machine.

**2.** Method according to claim 1, wherein the step of determining (100) the real speed threshold ($\omega_{real_th}$) comprises performing an estimation of the temperature of magnets of the rotor.

**3.** Method according to claims 1 or 2, wherein multiple sequences of steps a) - d) are repeated in series, when multiple reconfigurations of the electric machine are considered in series.

**4.** Method according to claims 1 or 2, wherein multiple sequences of the steps a) - d) are executed in parallel, when multiple reconfigurations of the electric machine are considered.

**5.** Method according to claim 3 or 4, comprising the steps of:

- determining (200) a first, second, ..., $n^{th}$ real speed threshold ($\omega_{real_th1}$, $\omega_{real_th2}$, ..., $\omega_{real_thn}$);
- checking (202) if the angular speed ($\omega$) of the rotor is greater than the real speed thresholds ($W_{real_th1}$, $\omega_{real_th2}$, ..., $\omega_{real-thn}$), respectively,
- in positive case, no reconfiguration from or to the first configuration *(config*$_1$*)*, the second configuration (*config*$_2$), ..., an n+1$^{th}$ configuration (*config*$_{nth}$), respectively, is performed;
- in negative case:

- determining (206) the current configuration of the electric machine;
- selecting (208) a reconfiguring decision method;
- deciding (210) whether to reconfigure the electric machine or not and, in positive case, reconfiguring (202) the electric machine.

## Patentansprüche

1. Verfahren zur Rekonfiguration einer elektrischen Maschine mit einem Rotor, der so angeordnet ist, dass er sich mit einer Winkelgeschwindigkeit ($\omega$) dreht, wobei die elektrische Maschine mit einem Wechselrichter gespeist wird und ein Rekonfigurationsprozess das Abschalten des Wechselrichters einschließt, wobei die elektrische Maschine so angeordnet ist, dass sie von einer ersten Konfiguration ($config_1$) zu einer zweiten Konfiguration ($config_2$) übergeht, wobei das Verfahren durch die folgenden Schritte gekennzeichnet ist:

   a) Bestimmen (100) einer tatsächlichen Geschwindigkeitsschwelle ($\omega_{real_th}$) in Echtzeit in Abhängigkeit von dem aktuellen Betriebszustand der elektrischen Maschine;
   b) Überprüfen (102), ob die Winkelgeschwindigkeit ($\omega$) des Rotors größer als die tatsächliche Geschwindigkeitsschwelle ($\omega_{real_th}$) ist;
   c) im positiven Fall wird keine Rekonfiguration aus der ersten Konfiguration ($config_1$) durchgeführt (104);
   d) im negativen Fall:

      d.1) Bestimmen (106) der aktuellen Konfiguration der elektrischen Maschine;
      d.2) Auswählen (108) eines Rekonfigurierungsentscheidungsverfahrens;
      d.3) Entscheiden (110), ob die elektrische Maschine rekonfiguriert werden soll oder nicht, und, im positiven Fall, Rekonfigurieren (112) der elektrischen Maschine,
      wobei der Wert der tatsächlichen Geschwindigkeitsschwelle ($\omega_{real_th}$) in dem folgenden Intervall bestimmt wird:

$$0.92\frac{V_{dc}}{\sqrt{3}\left[\left[\lambda_{mo}+\alpha(T-T_0)\right]+N_{rot}N_{stat}I_{rot}\right]}\leq\omega_{real_{th}}$$
$$\leq 1.08\frac{V_{dc}}{\sqrt{3}\left[\left[\lambda_{mo}+\alpha(T-T_0)\right]+N_{rot}N_{stat}I_{rot}\right]}$$

      wobei:

      - $\lambda_{mo}$ und $T_0$ jeweils ein magnetischer Referenzfluss und eine jeweilige Referenztemperatur der elektrischen Maschine sind;
      - $\alpha$ der Wärmekoeffizient eines Permanentmagnetmaterials von Magneten des Rotors ist;
      - $T$ die Magnettemperatur ist;
      - $N_{rot}$ und $N_{stat}$ jeweils die Anzahl der Windungen der Wicklungen auf dem Rotor und die Anzahl der Windungen der Wicklungen auf einem Stator der elektrischen Maschine sind;
      - $I_{rot}$ der Strom ist, der in den Rotorwindungen fließt;
      - $V_{dc}$ eine Versorgungsspannung der elektrischen Maschine ist.

2. Verfahren nach Anspruch 1, wobei der Schritt zum Bestimmen (100) der tatsächlichen Geschwindigkeitsschwelle ($\omega_{real_th}$) das Durchführen einer Schätzung der Temperatur von Magneten des Rotors umfasst.

3. Verfahren nach Anspruch 1 oder 2, wobei mehrere Sequenzen der Schritte a) - d) hintereinander wiederholt werden, wenn mehrere Rekonfigurationen der elektrischen Maschine hintereinander betrachtet werden.

4. Verfahren nach Anspruch 1 oder 2, wobei mehrere Sequenzen der Schritte a) - d) parallel ausgeführt werden, wenn mehrere Rekonfigurationen der elektrischen Maschine betrachtet werden.

5. Verfahren nach Anspruch 3 oder 4, umfassend die folgenden Schritte:

   - Bestimmen (200) einer ersten, zweiten, ..., $n^{-ten}$ tatsächlichen Geschwindigkeitsschwelle ($\omega_{real_th1}$, $\omega_{real_th2}$, ..., $\omega_{real_thn}$);
   - Überprüfen (202), ob jeweils die Winkelgeschwindigkeit ($\omega$) des Rotors größer als die tatsächlichen Geschwindigkeitsschwellen ($\omega_{real_th1}$, ($\omega_{real-th2}$, ... , ($\omega_{real-thn}$) ist,
   - im positiven Fall wird keine Rekonfiguration aus oder zu der ersten Konfiguration ($config_1$), der zweiten Konfiguration ($config_2$), ..., einer $n^{+1-ten}$ Konfiguration ($config_{nth}$) jeweils durchgeführt;

- im negativen Fall:

  - Bestimmen (206) der aktuellen Konfiguration der elektrischen Maschine;
  - Auswählen (208) eines Rekonfigurierungsentscheidungsverfahrens;
  - Entscheiden (210), ob die elektrische Maschine rekonfiguriert werden soll oder nicht, und, im positiven Fall, Rekonfigurieren (202) der elektrischen Maschine.

## Revendications

1. Procédé de reconfiguration d'une machine électrique incluant un rotor disposé pour tourner à une vitesse angulaire ($\omega$), dans lequel la machine électrique est alimentée par un onduleur et un procédé de reconfiguration inclut la mise hors tension de l'onduleur, la machine électrique étant disposée pour passer d'une première configuration (*$config_1$*) à une seconde configuration (*$config_2$*), le procédé étant **caractérisé par** les étapes suivantes :

   a) déterminer (100) en temps réel un seuil de vitesse réel ($\omega_{real_th}$) selon l'état de fonctionnement actuel de la machine électrique ;
   b) vérifier (102) si la vitesse angulaire ($\omega$) du rotor est supérieure audit seuil de vitesse réel ($\omega_{real_th}$) ;
   c) dans l'affirmative, aucune reconfiguration n'est effectuée (104) à partir de la première configuration (*$config_1$*) ;
   d) dans la négative :

      d.1) déterminer (106) la configuration actuelle de la machine électrique ;
      d.2) sélectionner (108) un procédé de décision de reconfiguration ;
      d.3) décider (110) s'il est nécessaire ou non de reconfigurer la machine électrique et, dans l'affirmative, reconfigurer (112) la machine électrique, dans lequel la valeur du seuil de vitesse réel ($\omega_{real_th}$) est déterminée dans l'intervalle suivant :

$$0.92\frac{V_{dc}}{\sqrt{3}\left[\left[\lambda_{mo}+\alpha(T-T_0)\right]+N_{rot}N_{stat}I_{rot}\right]}\leq\omega_{real_{th}}$$
$$\leq 1.08\frac{V_{dc}}{\sqrt{3}\left[\left[\lambda_{mo}+\alpha(T-T_0)\right]+N_{rot}N_{stat}I_{rot}\right]}$$

      dans lequel :

      - $\lambda_{mo}$ et $T_0$ sont respectivement un flux magnétique de référence et une température de référence respective de la machine électrique ;
      - $\alpha$ est le coefficient thermique d'un matériau à aimant permanent des aimants du rotor ;
      - $T$ est la température de l'aimant ;
      - $N_{rot}$ et $N_{stat}$ sont respectivement le nombre de tours des enroulements sur le rotor et le nombre de tours des enroulements sur un stator de la machine électrique ;
      - $I_{rot}$ est le courant circulant dans les enroulements du rotor ;
      - $V_{dc}$ est une tension d'alimentation de la machine électrique.

2. Procédé selon la revendication 1, dans lequel l'étape consistant à déterminer (100) le seuil de vitesse réel ($\omega_{real_th}$) comprend réaliser une estimation de la température des aimants du rotor.

3. Procédé selon les revendications 1 ou 2, dans lequel plusieurs séquences des étapes a) - d) sont répétées en série, lorsque plusieurs reconfigurations de la machine électrique sont envisagées en série.

4. Procédé selon les revendications 1 ou 2, dans lequel plusieurs séquences des étapes a) - d) sont exécutées en parallèle, lorsque plusieurs reconfigurations de la machine électrique sont envisagées.

5. Procédé selon la revendication 3 ou 4, comprenant les étapes suivantes :

   - déterminer (200) un premier, un deuxième, ... , un $n^{ième}$ seuil de vitesse réel ($\omega_{real_th1}$, $\omega_{real_th2}$, ... , $\omega r_{eal_thn}$) ;

- vérifier (202) si la vitesse angulaire ($\omega$) du rotor est supérieure aux seuils de vitesse réels ($\omega_{real_th1}$, $\omega_{real_th2}$, ⋯, $\omega_{real_thn}$), respectivement,
- dans l'affirmative, aucune reconfiguration à partir ou vers la première configuration (*$config_1$*), la deuxième configuration (*$config_2$*), ... , une n+1ème configuration (*$config_{nth}$*), respectivement, n'est effectuée ;
- dans la négative :

  - déterminer (206) la configuration actuelle de la machine électrique ;
  - sélectionner (208) un procédé de décision de reconfiguration ;
  - décider (210) s'il est nécessaire ou non de reconfigurer la machine électrique et, dans l'affirmative, reconfigurer (202) la machine électrique.

Fig.1

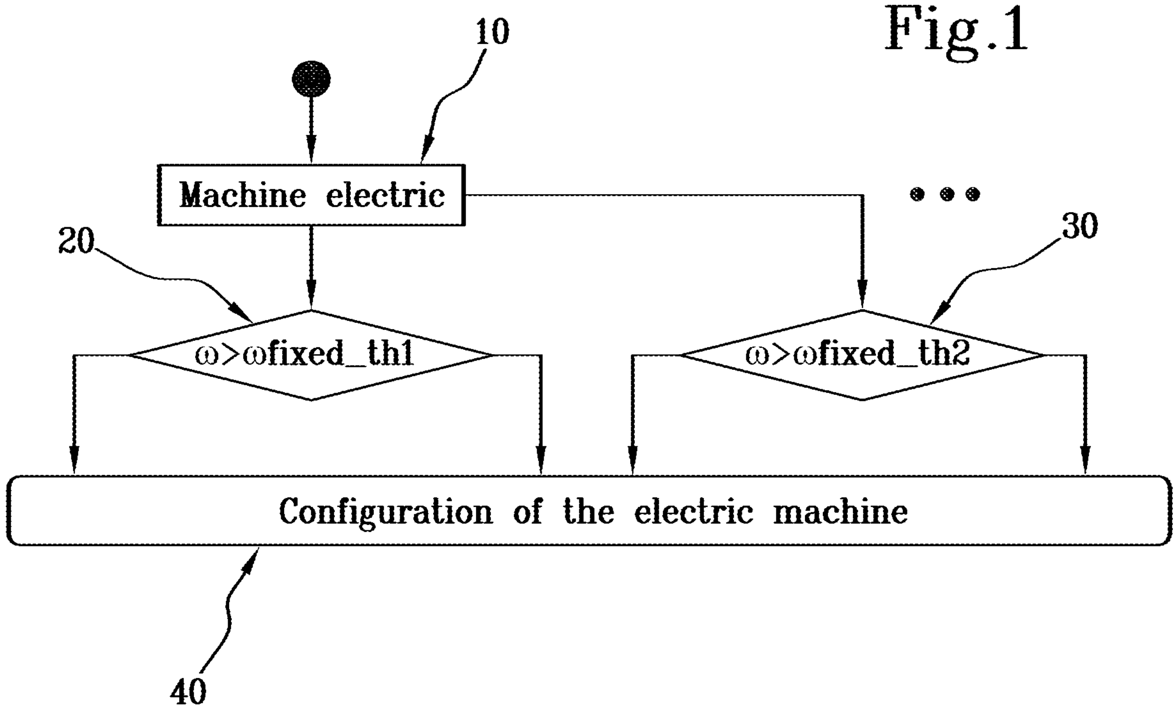
10
Machine electric
20
30
ω>ωfixed_th1
ω>ωfixed_th2
Configuration of the electric machine
40

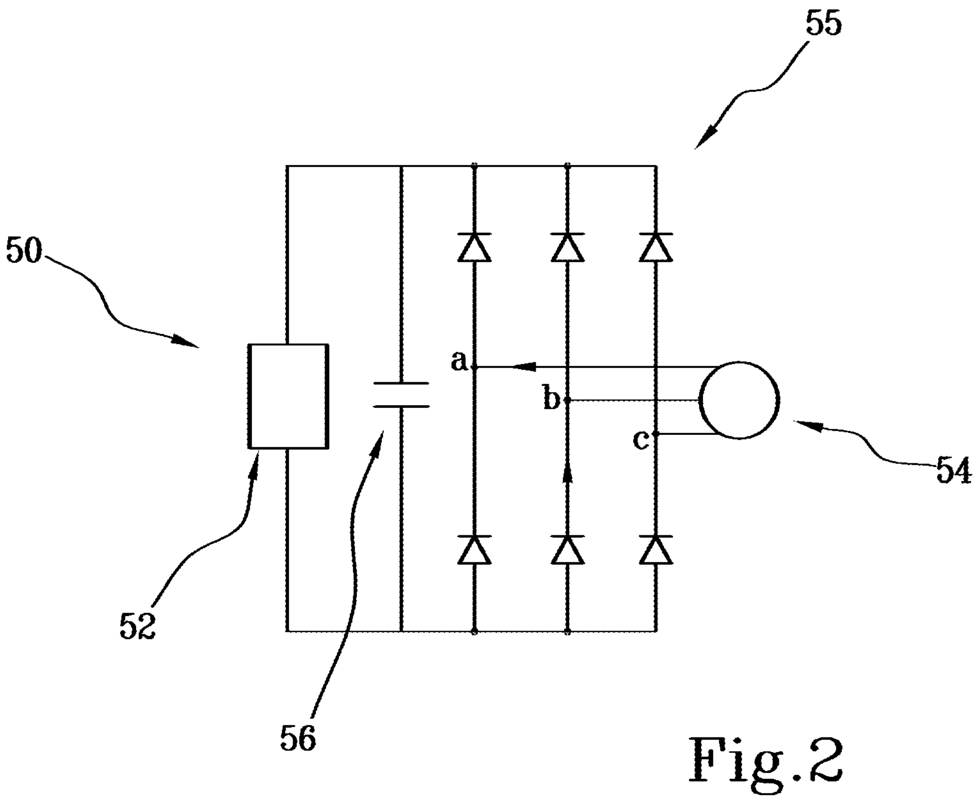
55
50
a
b
c
54
52
56

Fig.2

Fig.3

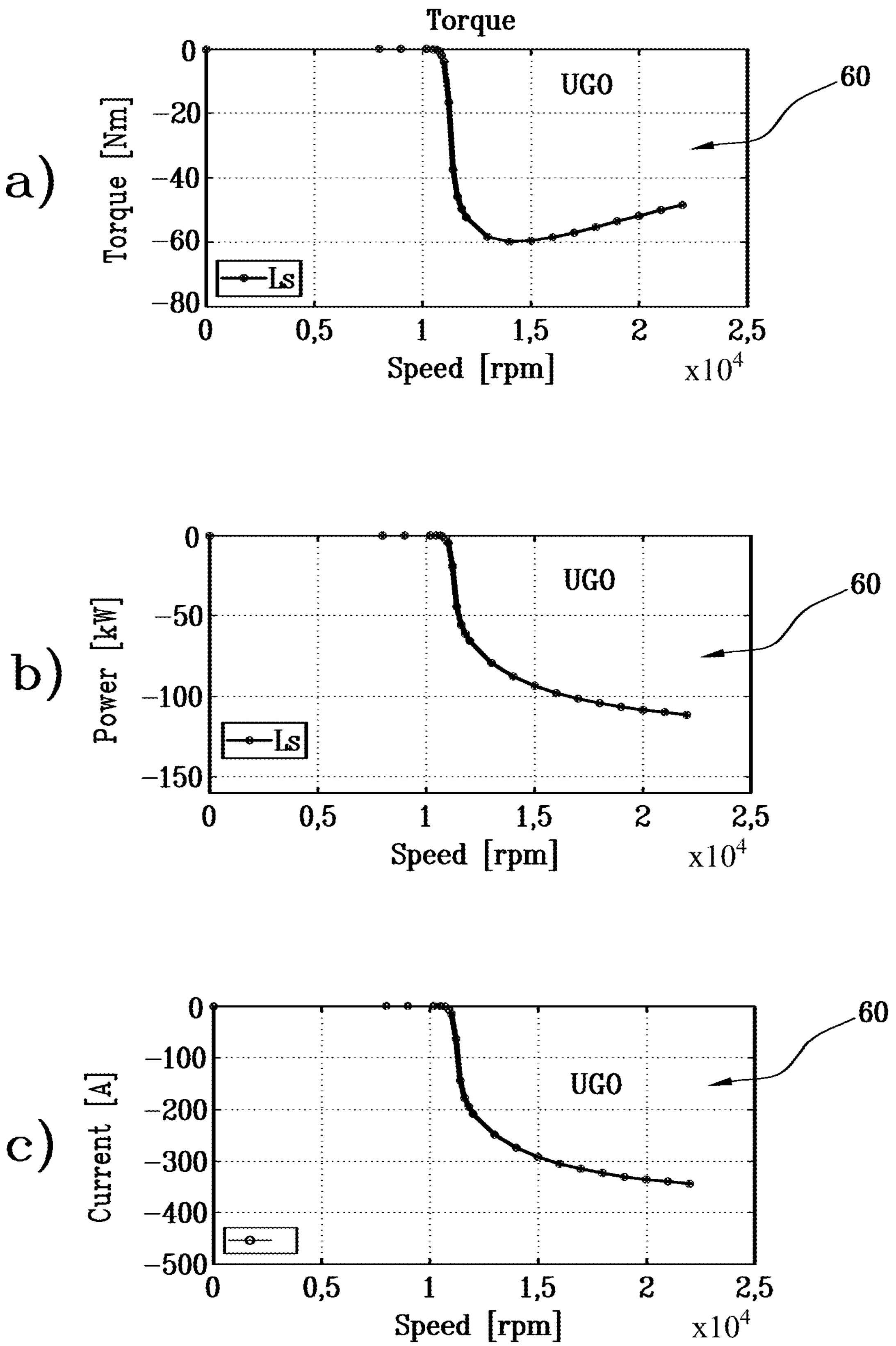
Torque
a)
Torque [Nm]
0
−20
−40
−60
−80
UGO
60
Ls
0
0,5
1
1,5
2
2,5
Speed [rpm]
x10^4
b)
Power [kW]
0
−50
−100
−150
UGO
60
Ls
Speed [rpm]
x10^4
c)
Current [A]
0
−100
−200
−300
−400
−500
UGO
60
Speed [rpm]
x10^4

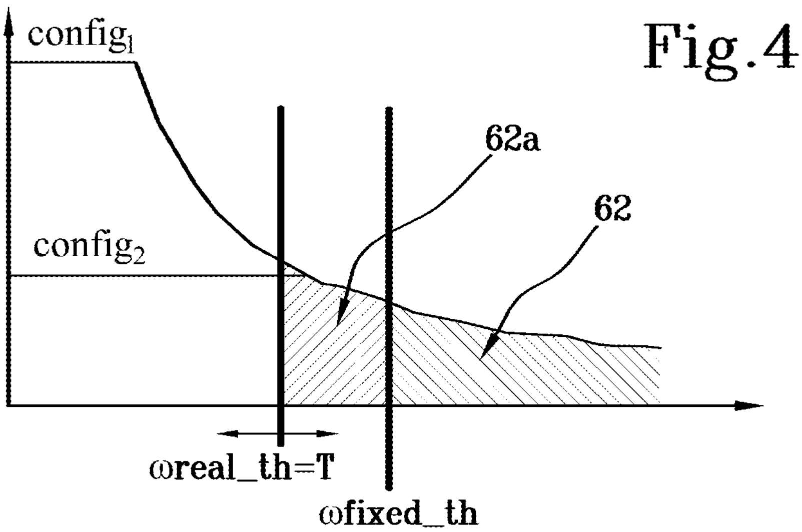


Fig.4

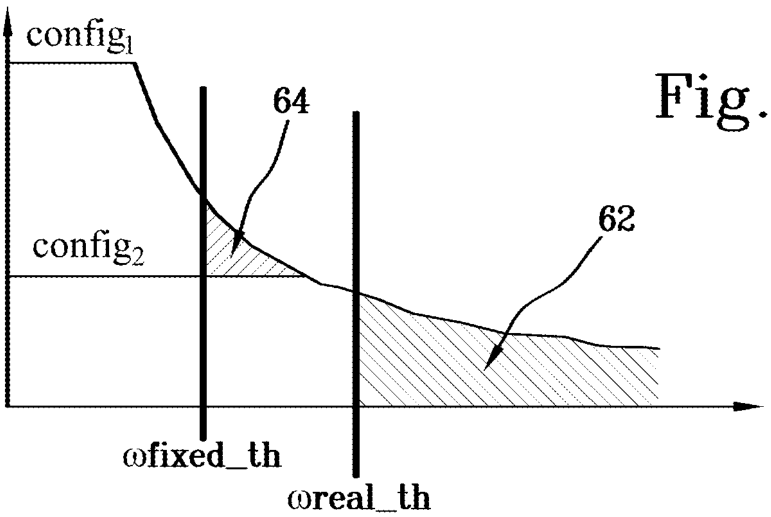


Fig.5

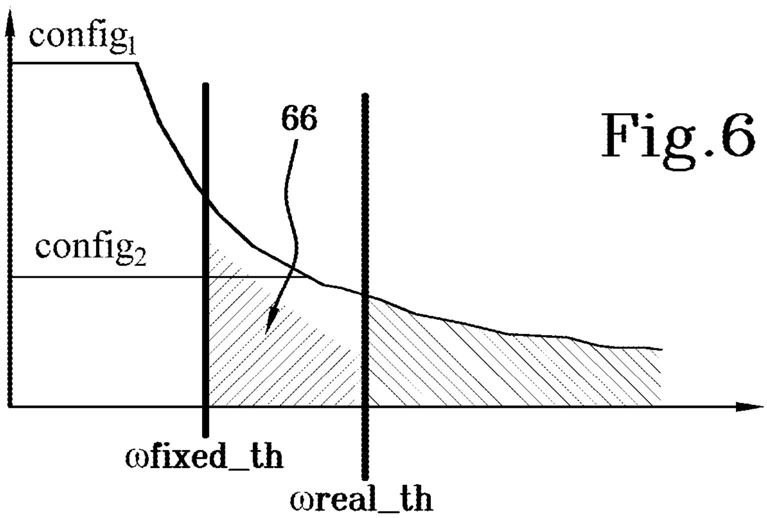


Fig.6

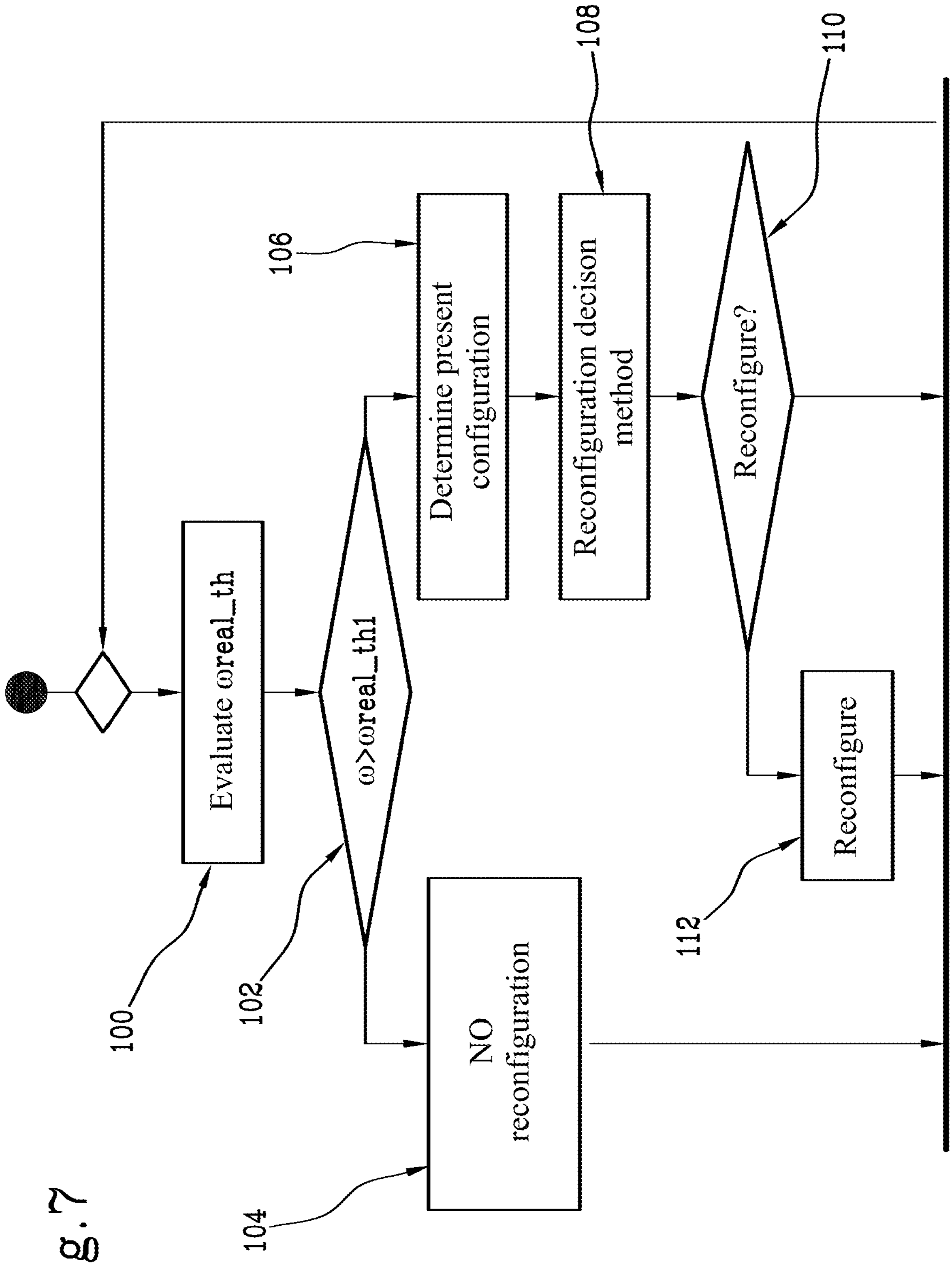
Evaluate ωreal_th
ω>ωreal_th1
Determine present configuration
Reconfiguration decison method
Reconfigure?
Reconfigure
NO reconfiguration
100
102
104
106
108
110
112

Fig.7

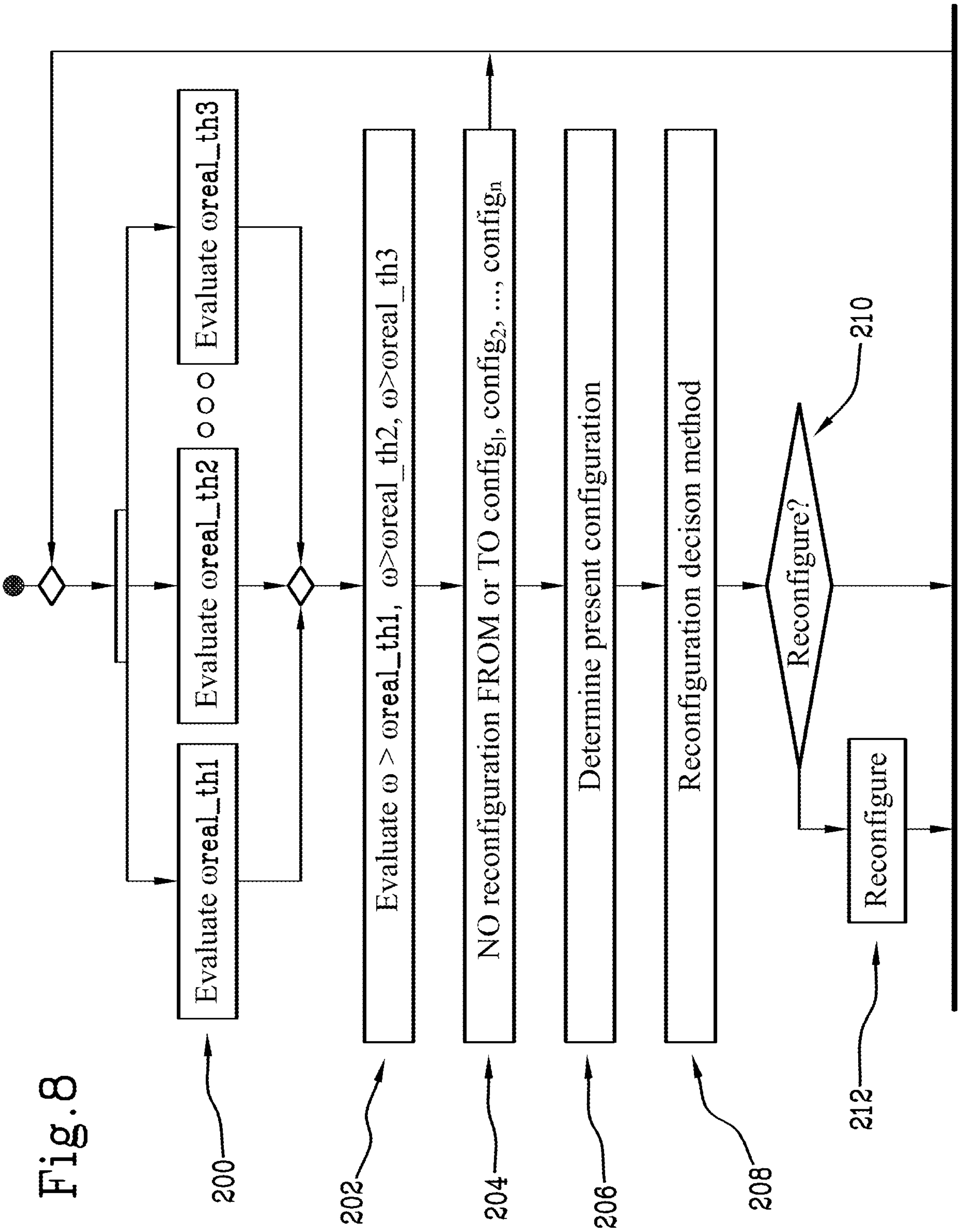
Evaluate ωreal_th1
Evaluate ωreal_th2
Evaluate ωreal_th3
Evaluate ω > ωreal_th1, ω>ωreal_th2, ω>ωreal_th3
NO reconfiguration FROM or TO config1, config2, ..., confign
Determine present configuration
Reconfiguration decison method
Reconfigure?
Reconfigure
200
202
204
206
208
210
212

Fig.8

Fig.9

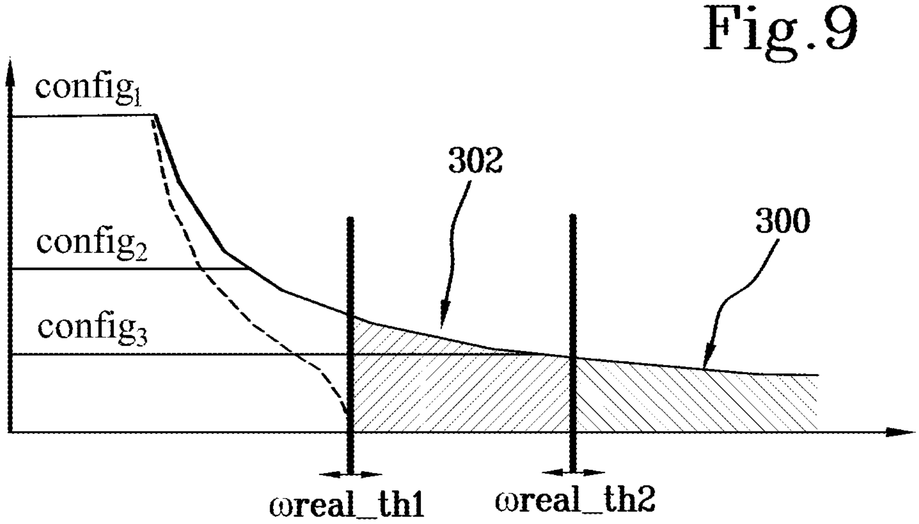
config1
config2
config3
302
300
ωreal_th1
ωreal_th2

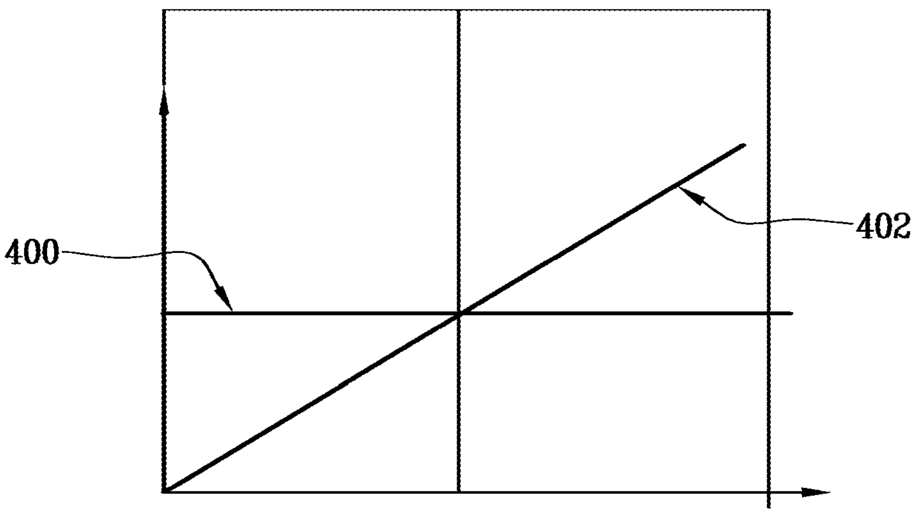
400
402
ωmax

Fig.10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2020194230 A
- WO 2021099894 A
- WO 2021079332 A
- JP H053694 A
- US 2021237603 A
- US 2015303860 A